# EUROPEAN PATENT SPECIFICATION

(11) **EP 2 558 787 B1**
(45) Date of publication and mention of the grant of the patent: **22.05.2019**
(21) Application number: 11722531.8
(22) Date of filing: 12.04.2011
(51) Int. Cl.: F24C 15/10, F24C 15/30, A47J 36/16, A47J 43/044

(54) **COOKING APPLIANCE**
KOCHVORRICHTUNG
APPAREIL DE CUISSON

(30) Priority: 14.04.2010 IT TO20100301
(43) Date of publication of application: 20.02.2013
(73) Proprietor: Whirlpool EMEA S.p.A., 20016 Pero (MI) (IT)
(72) Inventor: RAGANELLI, Francesco, I-20124 Milano (IT); PALMETO, Stefano, I-15100 Alessandria (IT); COLLEONI, Margherita, I-20133 Milano (IT); BUCCI, Manuela, I-20127 Milano (IT); SEMERARO, Antonio, I-10137 Torino (IT)
(74) Representative: Metroconsult Srl
(86) International application number: PCT/IB2011/051565
(87) International publication number: WO 2011/128839

(56) References cited:
- DE-B- 1 266 471
- DE-U1- 29 722 103
- US-A- 3 358 669

## Description

The present invention relates to a cooking appliance.

At present, one problem which is particularly felt in the field of kitchen furniture and furniture fittings relates to efficiently using the available space in order to optimise the volume taken up in a household environment.

Several types of cooking appliances are known in the art which are adapted to solve this problem.

One of these types employs heating elements secured to movable modules, so that these cooking appliances can be used in different modes.

One of these cooking appliances is shown in US patent 3,790,750, wherein two folding modules fitted with heaters can be closed over other fixed heaters. Further prior art can be found in DE 297 22 103U.

One drawback of this solution is that the folding modules must always be moved in order to carry out any cooking operations, even those that do not require the use of the fixed heaters.

In this solution, the arrangement of the heating elements implies some discomfort in using the cooking appliance.

The present invention relates to a cooking appliance as per claim 1.

The idea at the basis of the present invention is to provide a cooking appliance comprising at least one first module equipped with heating elements, said first module being movable between at least a first and a second position, wherein in the first position it lies over an operating module of the cooking appliance and in the second position it does not lie over said operating module.

Advantageously, the operating module may, in turn, comprise heating elements of its own.

The main advantage is that the spaces occupied by the cooking appliance can be optimised; in fact, when the operating module is not in use (i.e. it is not in operation) it takes up no room, since it remains hidden under the movable module.

These features as well as further advantages of the present invention will become more apparent from the following description of an embodiment thereof shown in the annexed drawings, provided by way of non-limiting example, wherein:
Fig. 1 shows a cooking appliance according to the present invention in a first position, in which the cooking module lies over the operating module;
Fig. 2 shows the cooking appliance of Fig. 1, wherein the cooking module has been moved vertically;
Fig. 3 shows the cooking appliance of Fig. 1, wherein the cooking module has been translated horizontally, thus partially uncovering the operating module;
Fig. 4 shows the cooking appliance of Fig. 1, wherein the cooking module has been translated horizontally, thus totally uncovering the operating module;
Fig. 5 shows the cooking appliance of Fig. 4, wherein the operating module is in a condition prior to operation;
Fig. 6 shows the cooking appliance of Fig. 5, wherein the operating module is in a first operating condition;
Fig. 7 shows the cooking appliance of Fig. 1, wherein the operating module is in a second operating condition;
Figs. 8 and 9 show some details of the operating module;
Figs. 10,11,12 show a sectional side view of the operating module of the top of Fig. 1 and some construction details of the slide guides in three different conditions;
Figs. 13 and 14 show a variant of the guides of Figs. 10-12;
Figs. 15 and 16 show two sectional views of a motorised arm mounted on the appliance of Fig. 1;
Fig. 17 shows a plan view of a motorised arm mounted on the appliance of Fig. 1.

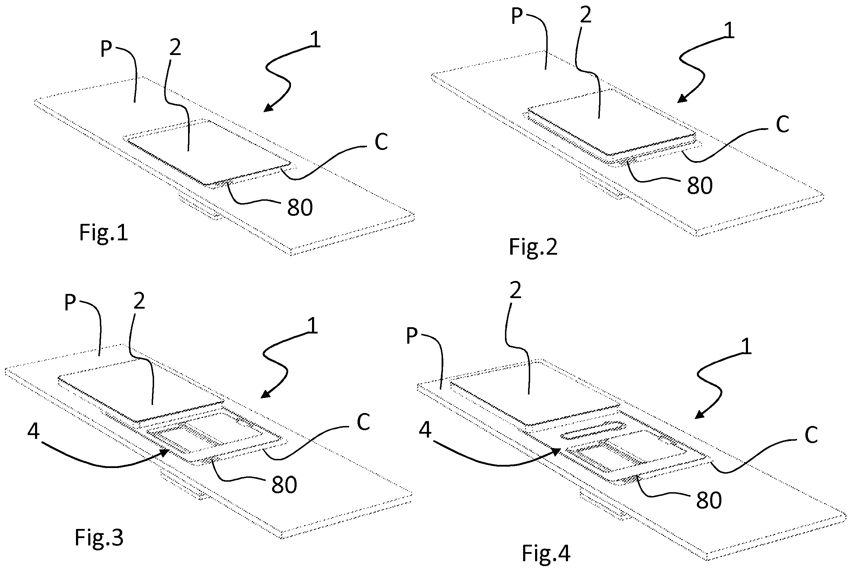

Referring now to Fig. 1, there is shown a cooking appliance 1 according to the present invention.

The cooking appliance 1 is of the so-called "built-in" type, i.e. its visible surface is coplanar with that of the top P of the cabinet housing it.

The cooking appliance comprises a cooking module designated by reference numeral 2.

The cooking module 2 comprises, in turn, one or more heating elements, such as, for example, electric heating plates, induction heaters, gas burners or the like (not shown in the drawings), which are substantially coplanar to the top surface of the module 2.

Such heating elements are adapted to create, on the cooking module 2, one or more cooking points, preferably four or five cooking points.

Preferably, in the example described herein the heating elements are of the electric type, which leads to the advantage that the power supply lines for each heating element can be provided more easily.

The cooking module 2 may, in general, comprise one or more heating elements variously arranged relative to one another.

In accordance with the teachings of the present invention, the cooking appliance 1 is fitted with slide guides which allow the cooking module 2 to be moved, so that it can be moved between a first position, in which it lies over an operating module 4 (as shown in Fig. 1), and a second position, in which the operating module 4 is accessible (as shown in Fig. 3 or 4).

In the present description and in the appended claims, the term "operating module" refers to a module of the cooking top on which one or more kitchen tools and/or heating elements are arranged.

More in detail, the module 4 is called "operating module" because it comprises operating units to be used in the kitchen, preferably of the electrically powered type, such as, for example:
- a motorised arm 7 for driving a kitchen robot or a mixer or kneading blade or the like,
- electric heating plates for a toaster or for the so-called "teppanyaky" cooking,
- a scale,
- a heated tub 12 for cooking or preparing foods,
or the like.

In the first position, the cooking appliance 2 is substantially coplanar to the top P and lies over the operating module 4, which is lower than the top P; in the second position, the cooking module 2 lies alongside the operating module 4, and the latter is coplanar with the top P, while the cooking module 2 lies directly over the top P.

With reference to Figs. 1 to 4, the module 2 can be moved in two directions perpendicular to each other, i.e. both vertically and horizontally, whereas the operating module 4 can only be moved vertically.

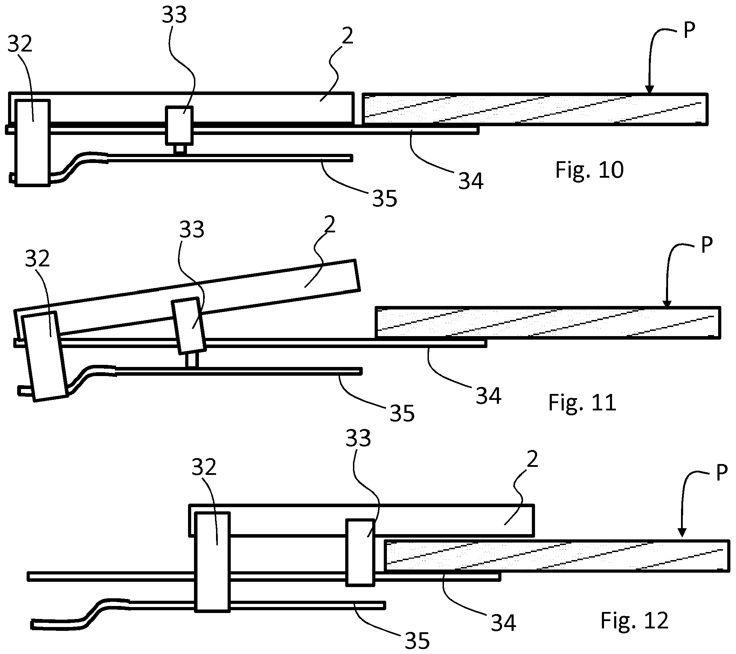

Specially designed slide guides are provided for this purpose, some embodiments of which will be discussed hereafter with reference to Figs. 10-14.

Starting from the status of Fig. 1, there is shown a first condition wherein the module 2 has its upper face coplanar to the support top P of the cabinet on which it is installed; Fig. 2 shows an initial stage of the movement of the module 2, wherein the latter has been moved vertically; though not visible, in the condition of Fig. 2 also the operating module 4 has been moved vertically together with the cooking module 2, and is already coplanar to the top P.

Fig. 3 shows an intermediate condition wherein the cooking module 2 has been partially translated, so as to uncover a portion of the operating module 4, which is shown with its upper face coplanar to the top P of the cabinet.

Fig. 3 shows a condition wherein the cooking module 2 has been translated sideways, thus uncovering substantially the whole upper face of the operating module 4.

It can therefore be stated that the cooking module 2 is movable from a first condition, in which it lies over the operating module 4 and is coplanar with the support top P and wherein the operating module 4 is lower than the top P, to a second condition, wherein the cooking module 2 is remote from the operating module 4 and lies over the top P and wherein the operating module 4 is substantially coplanar with the top P.

The phrase "coplanar with the top P" means that the visible and accessible upper surface of the modules 2 and 4 is located at the same height, as the top P of the cabinet on which they are mounted or housed.

More in particular, it must be pointed out that the cooking module 2 is shaped like a parallelepipedon having a certain thickness: in the condition shown in Fig. 2, the cooking module 2 translates upwards until its lower face comes at a level slightly higher the top P, thus allowing a subsequent horizontal translation of the cooking module 2 itself above the top P.

Such a horizontal movement leads the cooking module 2 to lie, whether partially (as in Fig. 3) or wholly (as in Fig. 4), over the top P, thereby making the operating module 4 accessible.

It must be pointed out right away that the cooking module 2 maintains its functionality (i.e. its heating elements can be activated) even in this position: in this case, it is advantageously possible to lay on it cooking containers or pots, even heavy ones, without jeopardising its stability.

As regards the operating module 4, it must be pointed out right away that it may optionally not translate upwards, without however departing from the scope of the present invention and without prejudice to the advantages thereof.

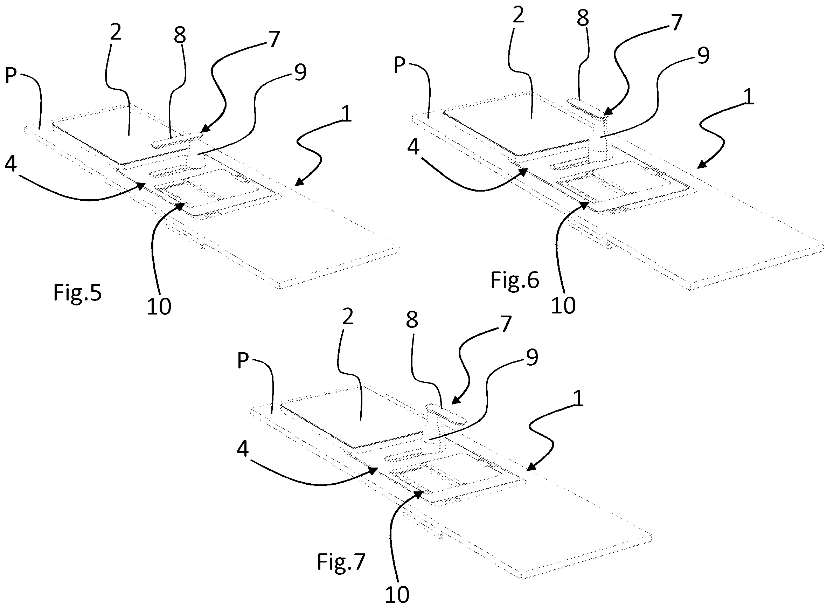

In the example shown with reference to Figs. 5-9, the operating module 4 comprises a motorised arm 7, consisting of an upright 9, which can be extracted vertically from the module 4, and a connection crosspiece 8, connected to the upright 9.

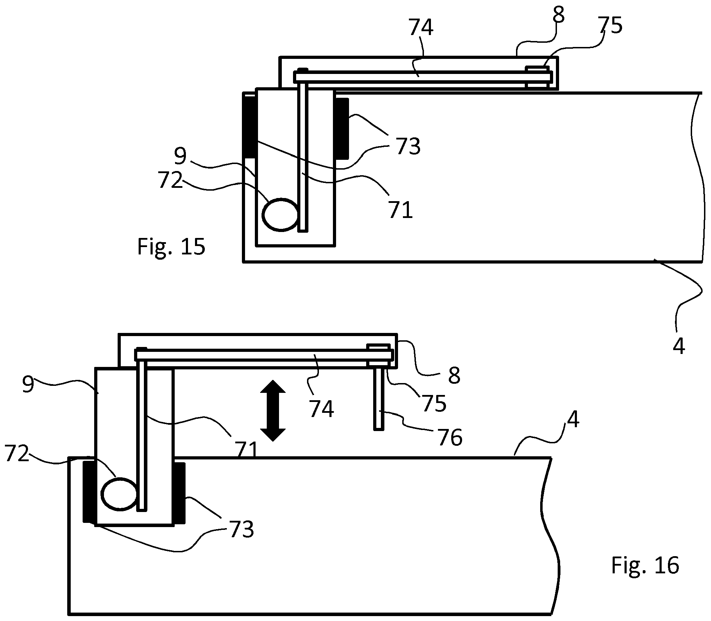

The motorised arm 7 is shown more in detail in the sectional views of Figs. 15 and 16. Within the upright 9 there is a transmission shaft 71 connected to an electric motor 72, both of which are movable together with the upright 9.

The latter is movable vertically relative to the module 4 by means of slide guides 73, so that it can be housed within the body of the module 4, as shown in Fig. 16 (thereby allowing the module 2 to surmount the module 4), or it can be brought to an extracted operating condition (e.g. when the cooking module uncovers the operating module 4).

The connection crosspiece 8 is rotatably associated with the upright 9, and extends substantially horizontal from the upright and can rotate about a vertical axis, so that its free end can be moved for the purposes that will be described below.

The connection crosspiece 8 houses movement transmission means 74 connected on one side to the transmission shaft 71 and on the other side to an engagement bushing 75.

Said motion transmission means 74 may comprise a belt transmission (as shown in the annexed drawings) or a set of transmission gears of a per se known type (not shown), adapted to transmit the torque of the shaft 71 to the engagement bushing 75.

The latter is adapted to engage with a rod 76, shown in the fitted condition in Fig. 16, which may be operationally connected to a mixer or kneading blade or the like.

As an alternative, the engagement bushing 75 may be connected to a power take-off of a kitchen robot, e.g. a kneading or mincing tool, a mixer, a centrifugal device for vegetables or the like.

Such a kitchen robot is per se known, and will not therefore be discussed any further.

One inherent advantage of combining such a motorised arm 7 with a cooking appliance 1 as described above relates to the fact that this allows to optimise both the occupied space and the functionalities of the cooking appliance 1 itself.

In fact, the engagement bushing 75 (due to the moving crosspiece 8) can be positioned over the different areas of the cooking appliance 1; for example, it can be placed over the cooking module 2, as shown in Fig. 6, e.g. over a heating element, while still maintaining its functionality and adding further functionalities, such as the possibility of cooking or preparing foods which must be subjected to the action of the kitchen robot while being heated or cooked, e.g. when preparing bread.

Alternatively, as shown in Fig. 7, the end of the arm with the engagement bushing 75 can be placed over a portion of the module 4 equipped with kitchen tools, e.g. a scale or the like.

Preferably, the length of the connection crosspiece 8 is such that the engagement bushing 75 can be moved over the centre of at least one heating element, i.e. the length of the connection crosspiece 8 is approximately equal to the horizontal distance between the axis of rotation of the connection crosspiece 8 and the centre of at least one heating element of the cooking module 2.

Said motorised arm 7 also offers further advantages. For example, if the engagement bushing 75 were coupled to the rod 76, instead of to the kitchen robot, and the rod 76 were operationally connected to a mixer blade, then one could cook or prepare foods directly in a pot placed over one heating element of the module 2 while subjecting them to the mixing action generated by the mixer blade associated with the arm 7.

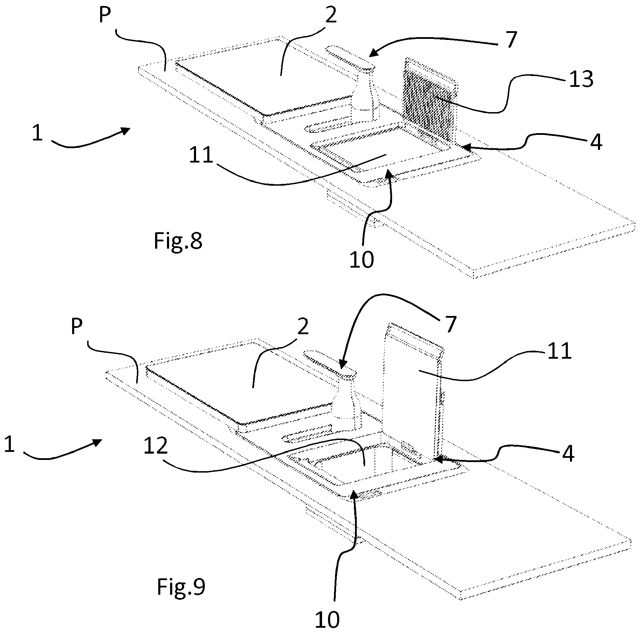

Referring back to the operating module 4, in the example shown in the annexed drawings it also comprises, in addition to the motorised arm 7, a heating element 10 visible in detail in Figs. 8 and 9.

The heating element 10 comprises two electric heating plates 11 and 13 and a heated tub 12.

The latter is provided with electric heating elements, e.g. electric resistors or inductors arranged at the bottom of the tub and heating the inner volume thereof.

One example of such a tub 12 is disclosed in European application EP1649794 in the name of MERLONI ELETTRODOMESTICI.

With the help of the motorised arm 7, this tub 12 can advantageously be used for preparing dough that needs to be heated, or for preparing foods that require to be cooked while being continuously mixed, such as risotto, polenta or the like.

For this purpose, the length of the connection crosspiece 8 is such that the engagement bushing 75 can be moved over the centre of the tub 12, i.e. the length of the connection crosspiece 8 is approximately equal to the horizontal distance between the axis of rotation of the connection crosspiece 8 and the geometric centre of the tub 12 as viewed from above.

Therefore, in this example the vertical axis of rotation of the connection crosspiece 8 is positioned at half the total horizontal distance between the centre of a heating element and the centre of the tub 12, and extends lengthwise between them.

It follows that the connection crosspiece 8, having length H, can reach with its free end (fitted with the engagement bushing 75), by rotating about the upright 9, both the centre of a heating element R and the centre of the tub 12.

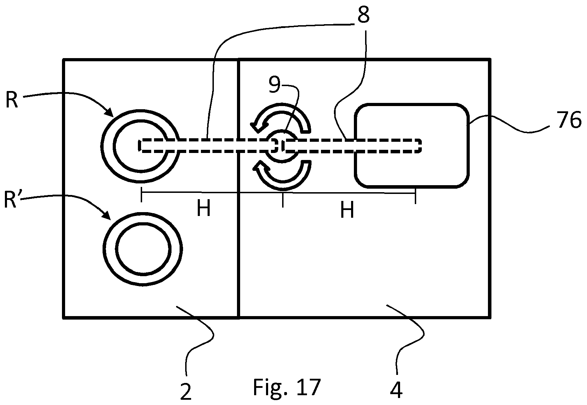

In this example, the vertical axis of rotation of the connection crosspiece 8 is positioned at half the total horizontal distance between the centre of a heating element and the centre of the tub 76, and extends lengthwise between them, as diagrammatically shown in Fig. 17, wherein the connection crosspiece 8, having length H, is indicated by means of a dashed line in the two positions that it can reach by rotating about the upright 9, which correspond to placing its free end (fitted with the engagement bushing 75) over a portion (preferably the central one) of a heating element R and a portion (preferably the central one) of the tub 76; the distance between said portions is equal to 2*H, and the upright 9 is positioned at a distance H from both.

Referring back to the heating element 10 of the operating module 4 and to the respective Figs. 8 and 9, it can be seen that it also comprises two electric heating plates 11 and 13. The latter are pivoted relative to the tub 12, so that they can cover the latter.

More in particular, the plate 11 is arranged in a manner such that the generated heat is irradiated upwards, whereas the plate 13 is arranged in a manner such that the generated heat is irradiated downwards when the plate 13 overlaps the plate 11.

The two plates 11 and 13 can be folded bookwise one onto the other, so that they can also be used as a toaster, a broiler or the like.

Advantageously, this results in a cooking top 1 according to the present invention being extremely versatile and taking up very little space.

Referring now to the guides that allow moving the module 2, a first example is shown in Figs. 10, 11 and 12.

Each side parallel to the sliding direction of the cooking module 2 has two supports, i.e. a front support 32 and a rear support 33, extending under the module 2 itself and carrying rollers or wheels at the respective free ends.

The front support rollers 32 engage into a lower guide 35, whereas the rear support rollers engage into an upper guide 34 and into a vertical guide portion 31 extending between the lower guide 35 and the upper guide 34.

The upper guide 34 is substantially straight and extends parallel to the top P, whereas the lower guide 35 has a curved portion corresponding to its free end.

Said curved portion, together with the fact that the rear support rollers are guided within the vertical guide 31, advantageously allows the cooking module 2 to be moved as shown in Figs. 10 to 13, i.e. by being first raised and then horizontally translated: in Fig. 10, in fact, the module 2 is coplanar to the top P; in Fig. 11 the module 2 undergoes a partial rotation that causes its top-facing portion to be raised past the upper surface of the top; and in the Fig. 12 the front portion of the module 2 has also been raised past the surface of the top P and can translate over it, thus making the operating module 4 accessible as previously described.

Said slide guides and their supports 32, 33 are described in more detail in Italian patent IT1208152 to BORTOLUZZI MOBILI.

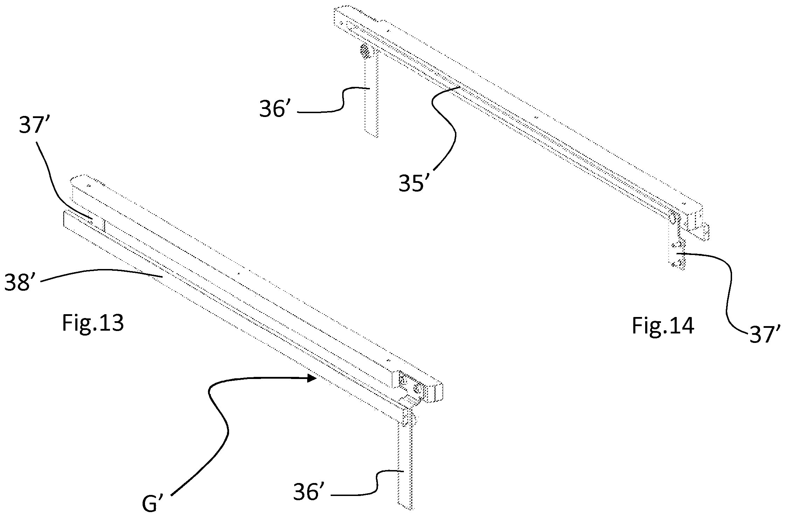

Another example of the slide guides is shown in Figs. 13 and 14.

In this case, both the cooking module 2 and the operating module 4 can be moved vertically and are for this purpose fitted with vertical slide rails of a known type, which allow them to move together vertically with respect to the top P.

When the cooking module 2 is lying over the operating module 4, both modules are in the lowered position, so that the cooking module 2 is substantially coplanar to the top P and the operating module 4 is underneath the latter.

Between the cooking module 2 and the operating module there are guides G', an example of which is shown in Figs. 13 and 14.

Said guides G' are essentially horizontal rails that allow the module 2 to slide or translate horizontally over the operating module 4.

Each guide G' comprises, for this purpose, a horizontal rail 35' fitted with a slide seat in which a skid 37' coupled to the cooking module 2 can slide.

Each guide G' also comprises a vertical bracket 36' and a horizontal bracket 38' secured to the operating module 4 housed in the cooking top, which in turn comprises the top P.

The cooking module 2 is supported on one side by the two skids 37' and has wheels, sliding skids or the like at the bottom which allow it, when it is remote from (not superimposed on) the operating module 4, to rest on the above-mentioned top P.

Starting from the condition wherein the cooking module 2 is coplanar to the top P, and therefore superimposed on the operating module 4 (which is thus lower than the top P), the user first raises both modules (the cooking module 2 and the operating module 4) until the latter is flush with the top P.

At this point, the cooking module 2 can be translated over the top P: to this end, the former rests on the latter through said wheels or skids, while at the same time also resting on the two skids 37', which are free to slide in the slide seat of the horizontal rail 35'.

The movements of the cooking module 2 and/or of the operating module 4 are advantageously obtained through automatic moving means. For this purpose, the cooking appliance 1 comprises one or more suitable controls for actuating the moving means.

The cooking appliance is also advantageously equipped with safety devices, possibly operationally connected to an electronic control system, in order to inhibit any dangerous movements of the cooking top and/or of the operating module 4, as well as for preventing the heating elements of the operating module 4 from being activated when the cooking module 2 is over the operating module 4.

As regards supplying power to the heating elements of the cooking module 2 and to the tools of the operating module 4, if power is provided by electric lines it is conceivable to use one or more wire harnesses of sufficient length or sliding contacts or other techniques known in the art.

The cooking appliance according to the present invention further comprises a control interface, e.g. positioned on the cooking module 2, of the touch type or the like.

The cooking appliance 1 is also advantageously equipped with a frame C fixedly associated with the top P.

Said frame, visible in Figs. 1-5, may accommodate a control interface 80 which can be used for controlling the heating elements of the cooking module 2 and those of the operating module 4.

In an alternative embodiment, the operating module 4 is advantageously equipped with a separated control interface which can only be used when the operating module 4 is accessible, so that the user cannot operate the latter by mistake when the cooking module is lying over it.

In fact, the cooking appliance may have more than two modules: for example, the cooking module 2 may be subdivided into two submodules, each adapted to be raised and moved horizontally over the top P in a direction opposite to the other one, so as to uncover the operating module 4 or at least a portion thereof.

Also, two or more cooking appliances 1 as described herein may be arranged side by side in order to provide access to a corresponding number of operating modules.

Handles may also be provided for manually operating the modules as they are being moved, or for this purpose one may employ a servo-assisted mechanism driven by an electric motor and comprising suitable linkages.

## Claims

1. A cooking appliance (1) comprising at least one cooking module (2) equipped with heating elements, housed in a cabinet comprising a top (P),
**characterised in that**
it further comprises at least one operating module (4), said cooking module (2) being movable between a first and a second positions, wherein in the first position the cooking module (2) lies over said operating module (4) and its upper face is substantially coplanar with the support top (P) of the cabinet, so that the operating module (4) is lower than the top (P),
whereas in the second position the cooking module (2) lies over the top (P) alongside said operating module (4) and the latter is substantially coplanar with the top (P), thus making the operating module (4) accessible, and
wherein at least said cooking module (2) is fitted with guides adapted to allow for a movement between said first and said second positions in at least two directions perpendicular to each other.

2. A cooking appliance (1) according to claim 1, wherein said operating module (4) is fitted with guides adapted to allow for a movement in at least the vertical direction.

3. A cooking appliance (1) according to claim 1 or 2, wherein said cooking module (2) can be moved horizontally.

4. A cooking appliance (1) according to claim 1, 2, or 3, wherein said cooking module (2) can be moved horizontally and vertically away from said operating module (4).

5. A cooking appliance (1) according to one or more of the preceding claims, wherein said operating module (4) comprises one or more electrically powered operating units.

6. A cooking appliance (1) according to the preceding claim, wherein at least one of said electrically powered operating units is one of the following:
- a motorised arm (7) for driving a kitchen robot or a mixer or kneading blade or the like,
- an electric heating plate (11,13),
- a scale,
- a heated tub (12) for cooking or preparing foods.

7. A cooking appliance (1) according to the preceding claim, wherein said motorised arm (7) can be extracted vertically from the operating module (4).

8. A cooking appliance (1) according to claim 6 or 7, comprising two electric heating plates (11,13) which can be folded bookwise one onto the other.

9. A combination of a support top (P) of a kitchen cabinet and a cooking appliance (1) housed on said support top (P), **characterised in that** said cooking appliance (1) is in accordance with one or more of claims 1 to 8.

## Patentansprüche

1. Kochgerät (1) umfassend mindestens ein Kochmodul (2), das mit Heizelementen ausgestattet ist und in einem Gehäuse eingehaust ist, das eine Oberseite (P) umfasst,
**dadurch gekennzeichnet, dass**
es ferner mindestens ein Betriebsmodul (4) umfasst, wobei das Kochmodul (2) beweglich zwischen einer ersten und einer zweiten Position ist, wobei das Kochmodul (2) in der ersten Position über dem Betriebsmodul (4) liegt und seine Oberfläche im Wesentlichen koplanar mit der Trägeroberseite (P) des Gehäuses ist, sodass das Betriebsmodul (4) tiefer als die Oberseite (P) ist,
wobei das Kochmodul (2) in der zweiten Position über der Oberseite (P) neben dem Betriebsmodul (4) liegt und das Letztgenannte im Wesentlichen koplanar mit der Oberseite (P) ist, um das Betriebsmodul (4) zugreifbar zu machen, und
wobei zumindest das Kochmodul (2) mit Führungen ausgestattet ist, die angepasst sind, eine Bewegung zwischen der ersten und der zweiten Position zumindest in zwei senkrecht zueinander liegenden Richtungen zu erlauben.

2. Kochgerät (1) nach Anspruch 1, wobei das Betriebsmodul (4) mit Führungen ausgestattet ist, die eingerichtet sind, eine Bewegung zumindest in der vertikalen Richtung zu erlauben.

3. Kochgerät (1) nach Anspruch 1 oder 2, wobei das Kochmodul (2) horizontal bewegt werden kann.

4. Kochgerät (1) nach einem der Ansprüche 1, 2 oder 3, wobei das Kochmodul (2) horizontal und vertikal weg vom Betriebsmodul (4) bewegt werden kann.

5. Kochgerät (1) nach einem oder mehreren der vorhergehenden Ansprüche, wobei das Betriebsmodul (4) ein oder mehrere elektrisch versorgte Betriebseinheiten umfasst.

6. Kochgerät (1) nach dem vorhergehenden Anspruch, wobei zumindest eines der elektrisch versorgten Betriebseinheiten eines der Folgenden ist:
- ein motorisierter Arm (7) zum Antreiben eines Küchenroboters oder eines Mischers oder Knetschaufel oder dergleichen,
- eine elektrische Heizplatte (11, 13),
- eine Waage,
- eine beheizte Wanne (12) zum Kochen oder Zubereiten von Lebensmitteln.

7. Kochgerät (1) nach dem vorhergehenden Anspruch, wobei der motorisierte Arm (7) vertikal aus dem Betriebsmodul (4) ausgefahren werden kann.

8. Kochgerät (1) nach Anspruch 6 oder 7, umfassend zwei elektrische Heizplatten (11, 13), die buchartig übereinander gefaltet werden können.

9. Kombination aus einer Trägeroberseite (P) eines Küchenschranks und einem Kochgerät (1), das in der Trägeroberseite (P) eingehaust ist, **dadurch gekennzeichnet, dass** das Kochgerät (1) eines gemäß einem oder mehreren der Ansprüche 1 bis 8 ist.

## Revendications

1. Appareil de cuisson (1) comprenant au moins un module de cuisson (2) équipé d'éléments chauffants, logé dans une armoire comprenant un plan de travail (P),
**caractérisé en ce que**
il comprend en outre au moins un module de fonctionnement (4), ledit module de cuisson (2) étant mobile entre une première et une seconde position, dans lequel dans la première position le module de cuisson (2) se trouve sur ledit module de fonctionnement (4) et sa face supérieure est sensiblement coplanaire avec le plan de travail de support (P) de l'armoire, de sorte que le module de fonctionnement (4) soit plus bas que le plan de travail (P),
tandis que dans la seconde position le module de cuisson (2) se trouve sur le plan de travail (P) le long dudit module de fonctionnement (4) et ce dernier est sensiblement coplanaire avec le plan de travail (P), rendant ainsi le module de fonctionnement (4) accessible, et
dans lequel au moins ledit module de cuisson (2) est doté de guides adaptés pour permettre un déplacement entre ladite première et ladite seconde position dans au moins deux directions perpendiculaires l'une à l'autre.

2. Appareil de cuisson (1) selon la revendication 1, dans lequel ledit module de fonctionnement (4) est doté de guides adaptés pour permettre un déplacement au moins dans la direction verticale.

3. Appareil de cuisson (1) selon la revendication 1 ou 2, dans lequel ledit module de cuisson (2) peut être déplacé à l'horizontale.

4. Appareil de cuisson (1) selon la revendication 1, 2 ou 3, dans lequel ledit module de cuisson (2) peut être déplacé à l'horizontale et à la verticale à l'opposé dudit module de fonctionnement (4).

5. Appareil de cuisson (1) selon une ou plusieurs des revendications précédentes, dans lequel ledit module de fonctionnement (4) comprend une ou plusieurs unités de fonctionnement à alimentation électrique.

6. Appareil de cuisson (1) selon la revendication précédente, dans lequel au moins l'une desdites unités de fonctionnement à alimentation électrique est l'un des éléments suivants :
- un bras motorisé (7) pour entraîner un robot de cuisine ou un mélangeur ou une pale de malaxage ou similaire,
- une plaque chauffante électrique (11, 13),
- une balance,
- une cuve chauffée (12) pour cuire ou préparer des aliments.

7. Appareil de cuisson (1) selon la revendication précédente, dans lequel ledit bras motorisé (7) peut être extrait à la verticale du module de fonctionnement (4).

8. Appareil de cuisson (1) selon la revendication 6 ou 7, comprenant deux plaques chauffantes électriques (11, 13) qui peuvent être pliées comme un livre l'une sur l'autre.

9. Combinaison d'un plan de travail de support (P) d'une armoire de cuisine et d'un appareil de cuisson (1) logé sur ledit plan de travail de support (P), **caractérisée en ce que** ledit appareil de cuisson (1) est conforme à une ou plusieurs des revendications 1 à 8.
